# EUROPÄISCHE PATENTSCHRIFT

(11) **EP 3 959 111 B1**
(45) Veröffentlichungstag und Bekanntmachung des Hinweises auf die Patenterteilung: **04.09.2024**
(21) Anmeldenummer: 20716396.5
(22) Anmeldetag: 19.03.2020
(51) Int. Cl.: B60W 30/045, B60W 30/06, B60W 30/18, B60W 50/08, B60W 50/14, B60L 15/36, B62D 9/00, B62D 15/02

(54) **VERFAHREN ZUM BETREIBEN EINES FAHRERASSISTENZSYSTEMS EINES ZUMINDEST TEILWEISE ELEKTRISCH BETREIBBAREN KRAFTFAHRZEUGS ZUM ANSTEUERN VON VIER RÄDERN, FAHRERASSISTENZSYSTEM SOWIE KRAFTFAHRZEUG**
METHOD FOR OPERATING A DRIVER ASSISTANCE SYSTEM OF AN AT LEAST PARTIALLY ELECTRICALLY OPERABLE MOTOR VEHICLE FOR CONTROLLING FOUR WHEELS, DRIVER ASSISTANCE SYSTEM, AND MOTOR VEHICLE
PROCÉDÉ POUR FAIRE FONCTIONNER UN SYSTÈME D'ASSISTANCE AU CONDUCTEUR D'UN VÉHICULE AUTOMOBILE QUI PEUT FONCTIONNER AU MOINS PARTIELLEMENT À L'ÉLECTRICITÉ EN VUE DE COMMANDER QUATRE ROUES, SYSTÈME D'ASSISTANCE AU CONDUCTEUR AINSI QUE VÉHICULE AUTOMOBILE

(30) Priorität: 26.04.2019 DE 102019003008
(43) Veröffentlichungstag der Anmeldung: 02.03.2022
(73) Patentinhaber: Mercedes-Benz Group AG, 70372 Stuttgart (DE)
(72) Erfinder: KNEIP, Joerg, 8010 Graz (AT)
(74) Vertreter: Novagraaf Group
(86) Internationale Anmeldenummer: PCT/EP2020/057680
(87) Internationale Veröffentlichungsnummer: WO 2020/216538

(56) Entgegenhaltungen:
- DE-A1- 102009 026 915
- DE-A1- 102010 031 122
- GB-A- 2 345 895

## Beschreibung

Die Erfindung betrifft ein Verfahren zum Betreiben eines Fahrerassistenzsystems eines zumindest teilweise elektrisch betreibbaren Kraftfahrzeugs, bei welchem mittels eines ersten Ansteuerungssignals ein erstes Rad des Kraftfahrzeugs, mittels eines zweiten Ansteuerungssignals ein zweites Rad des Kraftfahrzeugs, mittels eines dritten Ansteuerungssignals ein drittes Rad des Kraftfahrzeugs und mittels eines vierten Ansteuerungssignals ein viertes Rad des Kraftfahrzeugs unabhängig voneinander angetrieben werden, wobei in Abhängigkeit der vier Ansteuerungssignale zumindest ein erster Fahrmodus für das Kraftfahrzeug bereitgestellt wird. Ferner betrifft die Erfindung ein Fahrerassistenzsystem sowie ein Kraftfahrzeug.

Aus dem Stand der Technik ist bereits bekannt, dass ein jeweiliges Rad des Kraftfahrzeugs einzeln ansteuerbar ist. Dies kann insbesondere auch als Allradantrieb bezeichnet werden. Ferner ist beispielsweise bekannt, dass bei einem Kettenfahrzeug eine jeweilige Kette, beispielsweise bei einem Bagger, separat ansteuerbar ist, wobei zum Bewegen der Kette wiederum zwei Nutzereingaben für jede Kette separat erforderlich sind, um die entsprechenden Ketten bewegen zu können.

Beispielsweise offenbart die DE 40 05 356 A1 ein Fahrzeug mit mehreren Fahrwerken, deren Achsen zueinander verstellbar sind, so auszurüsten, dass jedes Fahrwerk mindestens zwei antreibbare Räder und je einen Motor hat. Idealerweise wird jedes Rad, das auch als Radkette ausgebildet sein kann, mit einem einzeln ansteuerbaren, reversierbaren Motor ausgerüstet. Dadurch wird ein Steuern oder Wenden des Fahrzeuges oder ein Drehen auf der Stelle ohne Bewegung der Last ermöglicht, indem nur die Antriebsgeschwindigkeit und Antriebsrichtung des Motors durch eine entsprechende programmierbare Einrichtung vorgegeben wird. Das Fahrzeug kann autark durch Programme oder mit Hilfe einer Fernsteuerung betrieben werden.

Weiterhin offenbart die EP 1 186 514 A2 ein Fahrzeug mit einem sehr kleinen Wendekreis, das auf der Stelle wenden kann, wie dies beispielsweise bei Rasenmähern und Schwadlegern vorgesehen sein kann. Diese weisen häufig Freilaufräder in Kombination mit einer Einzelradsteuerung angetriebenen Räder zur Lenkung auf. Solche Anordnung sind schwierig zu handhaben, insbesondere bei der Fahrt über nach seitwärts abfallendes Gelände, und können daher die Nutzbarkeit des Fahrzeugs einschränken. Es wird eine Lenkeinrichtung vorgeschlagen, welche ohne die Verwendung mechanischer Verstärkungseinrichtung entsprechende Lenkeigenschaften zur Verfügung stellt.

Des Weiteren offenbart die DE 196 46 559 A1 elektronische Einparkhilfe für Kraftfahrzeuge mit Einrichtungen zur Erfassung und Anzeige der Hindernisse oder der zur Verfügung stehenden Parkfläche. Es sind außerdem Lenkwinkelsensoren und ein elektronisches Rechner- und Regelungssystem vorgesehen, das auf der Basis der erfassten Daten über die freie Parkfläche, über die momentane Fahrzeugposition und über den aktuellen Lenkwinkel einen Einpark-Fahrvorgang errechnet und dem Fahrzeuglenker durch Vorgabe der erforderlichen Fahr- und Lenkmanöver mit Hilfe von optischen oder akustischen Anzeigevorrichtungen vorgibt.

Aus der DE 10 2009 026 915 A1 ist eine Vorrichtung und ein Verfahren zur Unterstützung des Einparkens und Ausparkens eines Kraftfahrzeugs bekannt. Das Kraftfahrzeug weist hierbei zwei angetriebenen Räder an einer Achse auf, welche jeweils unabhängig voneinander angetrieben werden können. Zur Unterstützung beim Rangieren zum Parken können die Räder in die gleiche Richtung, insbesondere mit unterschiedlicher Geschwindigkeit oder sogar in entgegengesetzter Richtung angetrieben werden, um so einen gewünschten Kurvenradius zu erreichen.

Aufgabe der vorliegenden Erfindung ist es, ein Verfahren, ein Fahrerassistenzsystem sowie ein Kraftfahrzeug zu schaffen, mittels welchen ein verbessertes Manövrieren des Kraftfahrzeugs realisiert werden kann.

Diese Aufgabe wird durch ein Verfahren, ein Fahrerassistenzsystem sowie durch ein Kraftfahrzeug gemäß den unabhängigen Patentansprüchen gelöst. Vorteilhafte Ausgestaltungsformen der Erfindung sind in den Unteransprüchen angegeben.

Ein Aspekt der Erfindung betrifft ein Verfahren zum Betreiben eines Fahrerassistenzsystems eines zumindest teilweise elektrisch betreibbaren Kraftfahrzeugs, bei welchem mittels eines ersten Ansteuerungssignals ein erstes Rad des Kraftfahrzeugs, mittels eines zweiten Ansteuerungssignals ein zweites Rad des Kraftfahrzeugs, mittels eines dritten Ansteuerungssignals ein viertes Rad des Kraftfahrzeugs und mittels eines vierten Ansteuerungssignals ein viertes Rad des Kraftfahrzeugs unabhängig voneinander angetrieben werden, wobei in Abhängigkeit der vier Ansteuerungssignale zumindest ein erster Fahrmodus für das Kraftfahrzeug bereitgestellt wird.

Erfindungsgemäß wird hierzu ein jeweiliges Rad mittels einem jeweiligem dem Rad zugeordneten elektrischen Motor angetrieben. Dadurch wird ein Allradantrieb bereitgestellt, bei dem jedes Rad durch einen eigenen ansteuerbaren elektrischen Motor angetrieben wird. Dies kann beispielsweise über einen radnahen elektrischen Motor für jedes Rad einzeln oder durch einen jeweiligen Radnabenmotor in einem jeweiligen Rad erfolgen. Dadurch wird jedem Rad eine freie Antriebsleistung durch einen elektrischen Motor zugewiesen, sodass einem jeden Rad freie Drehmomente, Drehzahlen sowie eine Bewegungsrichtung zugeordnet werden können. Dies erhöht die Manövrierfähigkeit des Kraftfahrzeugs.

Es ist vorgesehen, dass in Abhängigkeit der vier Ansteuerungssignale zusätzlich zumindest ein zweiter Fahrmodus bereitgestellt wird, wobei der erste Fahrmodus oder der zweite Fahrmodus mittels einer Betätigungseinrichtung des Fahrerassistenzsystems durch eine einzige Nutzereingabe eingestellt wird, und die vier Ansteuerungssignale in Abhängigkeit der Nutzereingabe mittels einer elektronischen Recheneinrichtung des Fahrerassistenzsystems zum Ansteuern der vier Räder in Abhängigkeit des eingestellten Fahrmodus erzeugt werden.

Dadurch ist es ermöglicht, dass die vier Räder jeweils unabhängig voneinander und insbesondere relativ zueinander angetrieben werden. Dadurch kann ein verbessertes Manövrieren des Kraftfahrzeugs, insbesondere in einer Geländeumgebung, welche auch als Offroad-Umgebung bezeichnet werden kann, und auch auf einer Straße realisiert werden. Dadurch ist es ferner ermöglicht, dass eine Drehung des Kraftfahrzeugs beziehungsweise ein Wenden des Kraftfahrzeugs nicht nur durch einen Lenkeinschlag an einer Lenkeinrichtung des Kraftfahrzeugs ermöglicht ist, sondern zusätzlich beziehungsweise alleinig durch die Relativdrehung der Räder untereinander, wobei dies insbesondere zwischen den beiden Rädern an einer Kraftfahrzeugseite realisiert ist.

Unter dem ersten Fahrmodus und dem zweiten Fahrmodus ist ein jeweiliges Fahrmanöver, also die Bewegung des Kraftfahrzeugs, zu verstehen. Bei dem Kraftfahrzeug handelt es sich insbesondere um ein Kraftfahrzeug mit einem Allradantrieb.

Erfindungsgemäß wird als erster Fahrmodus ein erstes Wendemanöver des Kraftfahrzeugs eingestellt und als zweiter Fahrmodus wird ein zum ersten Wendemanöver unterschiedliches zweites Wendemanöver des Kraftfahrzeugs eingestellt. Bei dem ersten Wendemanöver kann es sich beispielsweise um einen sogenannten Offroad-Turn handeln, also ein Wendemanöver im Gelände. Bei dem Offroad-Turn drehen die Räder der rechten Seite des Kraftfahrzeugs und der linken Seite des Kraftfahrzeugs gegeneinander. Eine Linksdrehung kann dabei dadurch realisiert werden, dass die linke Seite rückwärts dreht und die rechte Seite vorwärts dreht. Eine Rechtsdrehung kann realisiert werden, in dem die rechte Seite rückwärts dreht und die linke Seite vorwärts. Insbesondere kann dadurch eine hohe Wendigkeit im Gelände des Kraftfahrzeugs realisiert werden. Dadurch kann ein Wendemanöver bei geringem Platzbedarf und ein Wenden in einem Zug realisiert werden. Die Drehachse, also ein Drehpunkt, des Kraftfahrzeugs befindet sich dabei bei gleicher Traktion genau im Schnittpunkt der Verbindungslinien der Räder. Die Räder drehen dabei insbesondere mit einer gleichen Geschwindigkeit. Die vorderen Räder befinden sich dabei insbesondere in einer Geradeausstellung. Mit anderen Worten weisen die Vorderräder keinen Lenkeinschlag auf.

Unter der einzigen Nutzereingabe ist insbesondere zu verstehen, dass der Nutzer lediglich den Fahrmodus als Nutzereingabe auswählt und durch die Auswahl des Fahrmodus die entsprechenden Ansteuerungssignale für die Räder erzeugt werden. Somit muss der Nutzer lediglich den Fahrmodus auswählen und die Ansteuerung wird mittels der elektronischen Recheneinrichtung selbstständig durchgeführt. Es sind somit nicht, wie im Stand der Technik, zwei Nutzereingaben nötig, um ein Manövrieren des Kraftfahrzeugs, insbesondere ein Wenden des Kraftfahrzeugs, durchzuführen. Dadurch ist ein erhöhter Fahrkomfort für den Nutzer bei erhöhter Manövrierbarkeit des Kraftfahrzeugs realisiert.

Erfindungsgemäß wird, mittels des Fahrerassistenzsystems das Kraftfahrzeug zumindest teilweise autonom, insbesondere vollautonom, im zumindest ersten Fahrmodus und im zumindest zweiten Fahrmodus betrieben. Beispielsweise kann ein Parken vollautonom erfolgen. Des Weiteren kann die Lenkung autonom sowie die Geschwindigkeitseinstellung per Gaspedal realisiert werden. Für den ersten Fahrmodus, , den "Offroad Turn", könnte die Ansteuerung auch ohne eine Betätigung des Gaspedals erfolgen, beispielsweise in dem ausschließlich über eine Drehung beziehungsweise einen Drehwinkel den Lenkrades gegen einen haptischen Widerstand der Fahrmodus durchgeführt wird. Eine dabei vom Benutzer aufgebrachte Kraft oder eine Größe des Lenkwinkeleinschlags kann dann einer Drehgeschwindigkeit des Fahrzeugs zugeordnet werden. Eine Erhöhung des Kraftaufwands oder des Lenkwinkels gegen den haptischen Widerstand lässt das Fahrzeug zum Beispiel schneller drehen. Hierbei genügen dann schon geringe Lenkwinkel am Lenkrad, so dass sich das Lenkrad nur minimal drehen muss und je nach Ausgestaltung des Fahrzeugs erfolgt dann auch nur ein sehr geringer Lenkeinschlag der Räder oder beispielsweise mit einer Steer-by-Wire-Funktion kann das Drehen der Räder an sich auch ganz unterbleiben. Insbesondere ist es dadurch ermöglicht, dass ein möglichst komfortabler Betrieb des Kraftfahrzeugs, mittels des Fahrerassistenzsystems realisiert werden kann.

Erfindungsgemäß kann der erste Fahrmodus (F1) nur aktiviert werden, wenn mindestens eine der folgenden Freigabebedingungen erfüllt ist:
- es ist kein Anhänger am Kraftfahrzeug (10) angehängt und/oder
- eine Navigationseinrichtung des Kraftfahrzeugs (10) erkennt, dass sich das Kraftfahrzeug (10) im Gelände befindet und/oder
- eine Geschwindigkeit des Kraftfahrzeugs (10) liegt unter einem zu definierenden Wert.

Sollte sich das Kraftfahrzeug im Gelände befinden, so kann der erste Fahrmodus F1 durchgeführt werden. Ferner kann die Geschwindigkeit des Kraftfahrzeugs unter einen zu definierenden Wert liegen, sodass das erste Fahrmodus durchgeführt werden kann. Sollten diese Bedingungen nicht erfüllt sein, so kann auf einer Anzeigeeinrichtung angezeigt werden, dass Manöver nicht möglich ist.

Insbesondere kann vorgesehen sein, dass das erfindungsgemäße Verfahren dauerhaft als Lenkunterstützung im Kraftfahrzeug installiert werden kann. Alternativ kann dies ebenfalls lediglich unter bestimmten Bedingungen aktivierbar sein und beispielsweise im Sinne einer "agilen Lenkung" mit einem sogenannten Torque-Vectoring das Fahrverhalten des Kraftfahrzeugs unterstützen und verbessern. Insbesondere kann jedoch vorgesehen sein, dass die entsprechende unterschiedliche beziehungsweise unabhängige Ansteuerung der Räder lediglich in einem speziellen Fahrmodus, vorliegende im ersten Fahrmodus und im zweiten Fahrmodus, realisiert wird, so dass der erste Fahrmodus und der zweite Fahrmodus sich von einem regulären Fahrbetreib des Kraftfahrzeugs unterscheiden.

Insbesondere kann erfindungsgemäß dadurch die Kurven-/und Wendetrajektorie des Kraftfahrzeugs verbessert werden.

Insbesondere kann vorgesehen sein, dass das Kraftfahrzeug ein zumindest teilweise geländegängiges Kraftfahrzeug ist. Dadurch ist es ermöglicht, dass beispielsweise im Gelände mit einem geringstmöglichen Platzbedarf für das Kraftfahrzeug eine Drehung beziehungsweise eine Wende des Kraftfahrzeugs realisiert werden kann.

Vorteilhaft kann gemäß einer optionalen Weiterbildung der Erfindung zu einer funktionellen Freigabe der Manöveraktivierung des ersten Fahrmodus (F1) mindestens eine weitere Freigabebedingung vom Bordnetz und/oder von einer funktionalen Sicherheit und/oder von einem Userinterface kommen. Insbesondere können so weitere Freigabebedingungen beispielsweise vom Bordnetz, von einer funktionalen Sicherheit, Produkthaftung oder von einem Userinterface kommen. Sofern alle Bedingungen erfüllt sind, liegt die funktionelle Freigabe zur Manöveraktivierung vor.

Gemäß einer vorteilhaften Ausgestaltungsform werden mittels der vier Ansteuerungssignale jeweils unterschiedliche Drehzahlen und/oder Drehmomente und/oder Bewegungsrichtungen der vier Räder eingestellt. Mit anderen Worten kann mittels des Ansteuerungssignals die Drehzahl und/das Drehmoment und/oder Bewegungsrichtung des jeweiligen Rades eingestellt werden. Dadurch ist es ermöglicht, dass sich die Räder zueinander relativ bewegen können beziehungsweise bewegt werden. Dies ermöglicht eine hohe Flexibilität des Kraftfahrzeugs, sodass mit geringem Platzbedarf das Kraftfahrzeug gedreht beziehungsweise gewendet werden kann. Dadurch erhöht sich die Manövrierfähigkeit des Kraftfahrzeugs.

Insbesondere kann vorgesehen sein, dass der Offroad-Turn nicht auf einer Straße realisiert werden kann, da die Drehachse in der Mitte der Fahrspur liegt. Insbesondere hat diesen Hintergrund darin, dass bei einem erfolgreichen Wendemanöver mit ausreichend Platz, das Kraftfahrzeug später falsch auf der Spur liegt. Daher kann vorgesehen sein, dass das Manöver lediglich im Gelände zugelassen ist. Beispielsweise kann ferner vorgesehen sein, dass dieses Manöver lediglich erlaubt ist, wenn kein Anhänger am Kraftfahrzeug angeordnet ist. Ferner kann beispielsweise über eine Lokalisierung mittels eines globalen satellitengestützten Navigationssystems (Global Navigation Satelite System - GNSS), beispielsweise mittels GPS, ermittelt werden, ob das Kraftfahrzeug sich im Gelände befindet oder auf der Straße. Ferner kann ein Geschwindigkeitsschwellwert vorgegeben sein, beispielsweise kleiner als 3 km/h, bei dem der Offroad-Turn erst erlaubt ist. Ferner kann das Manöver erst dann erlaubt sein, wenn weitere Freigabebedingungen, beispielsweise vom Bordnetz, Funktionaler Sicherheit, Produkthaftung oder eines User Interfaces erfüllt sind.

Als zweites Wendemanöver kann beispielsweise ein sogenannter Street-Turn, also ein Wendemanöver auf der Straße, bereitgestellt werden. Es handelt sich somit analog zum Offroad-Turn um ein Wendemanöver für die Straße. Bei dem Street-Turn drehen die Räder einer Seite des Kraftfahrzeugs schneller als die der anderen Seite des Kraftfahrzeugs, jedoch erfolgt kein entgegengesetztes Drehen der Seiten. Unter Seite des Kraftfahrzeugs ist insbesondere eine linke Seite des Kraftfahrzeugs in einer Hauptfahrrichtung des Kraftfahrzeugs und in einer Längsrichtung des Kraftfahrzeugs betrachtet und eine rechte Seite des Kraftfahrzeugs erfindungsgemäß zu verstehen. Insbesondere sind unter der jeweiligen Seite die an dieser Seite angeordneten Räder zu verstehen. Eine Linksdrehung kann dadurch realisiert werden, dass die linke Seite langsamer dreht beziehungsweise nicht dreht, gegenüber der rechten Seite. Eine Rechtsdrehung kann dadurch realisiert werden, dass die rechte Seite langsamer dreht als die linke Seite. Zum Wenden auf der Straße hängt dann die Drehrichtung auch davon ab, ob man sich in einem Land mit Linksverkehr oder mit Rechtsverkehr befindet. Generell kann die Funktion beide Drehrichtungen darstellen und dann entweder in die vom Fahrer gewünschte Richtung drehen oder über Positionsdaten, Länder- und Verkehrssituationskennung und Umfelderkennung die Drehung automatisiert in die entsprechende Drehrichtung zum Wenden auf der Straße durchführen.

Insbesondere kann zusätzlich realisiert werden, dass im Gegensatz zum Offroad-Turn dieses Manöver auch rückwärts gefahren werden kann. Dadurch kann auch eine Wende im Straßenverkehr für das Kraftfahrzeug realisiert werden, wobei insbesondere eine verbesserte Manövrierfähigkeit und auch ein geringer Platzbedarf für das Kraftfahrzeug beim Wenden realisiert werden kann. Der Wendepunkt des Kraftfahrzeugs liegt dabei insbesondere außerhalb des Kraftfahrzeugs. Dadurch kann beispielsweise ein Wendemanöver in einem Zug auf die Gegenfahrbahn realisiert werden. Insbesondere kann dazu ferner realisiert werden, dass ein geringer Reifenverschleiß auftritt, da sich die Räder nicht gegeneinander bewegen oder eine Seite still steht, sondern nur ein geringfügiges Mitdrehen der Reifen realisiert werden kann, wodurch sowohl der geringe Wendekreis als auch der geringe Verschleiß realisiert werden kann.

Insbesondere kann eine entsprechende Berechnung der Drehzahlverhältnisse der Fahrzeugseiten, also der Räder auf einer Fahrzeugseite, mittels der elektronischen Recheneinrichtung bestimmt werden. Insbesondere kann hier die Festlegung eines Achsenpunktes als vertikaler Abstand vom Mittelpunkt der Reifen einer Seite für das Wendemanöver bestimmt werden, indem die Fahrbahnbreite und die Kraftfahrzeugbreite genutzt werden. Abhängig von einer erfassten Position des Kraftfahrzeugs relativ zur Fahrbahn kann dann zusätzlich die Drehzahl der Räder bestimmt werden. Es ergibt sich, dass bei sehr engen Fahrbahnen und Position des Kraftfahrzeugs direkt neben dem Mittelstreifen der Achsenpunkt tatsächlich nahe zwischen den Reifen einer Seite liegen sollte. Die Drehung der inneren Räder ist zu minimieren und dient dann rein dem Schutz der Reifen.

Insbesondere kann ferner beim Street-Turn vorgesehen sein, dass im Gegensatz zum Offroad-Turn die Vorderräder nicht zwangsläufig in die Nulllage gebracht werden. Sollten die Vorderräder nicht geradeaus stehen, sondern in Richtung der Fahrbahnmitte, dann verkürzt sich der Durchmesser des inneren Kreises beziehungsweise des Bahnradius und damit auch der Wert eines äußeren Kreises der Räder. Diese Wendeführung ist ein gewünschter Effekt bei engen Straßen und wird daher zugelassen.

Bei der Erkennung der Position des Fahrzeugs auf der Strasse kann das Fahrerassistenzsystem eine Richtung vorschlagen. Sollte beispielsweise keine Erkennung der Straßensituation vorliegen, dann kann auch ein zu definierender Lenkeinschlag oder ein bereits erfolgter Lenkeinschlag als Richtungsangabe verwendet werden. Die Lenkeinrichtung gibt dann die Innenseite vor, deren Räder mit beispielsweise maximal 15 % der Geschwindigkeit der äußeren Räder drehen. Eine klare Richtungsangabe liegt dann vor, wenn der Lenkeinschlag einen zu definierenden Drehwinkel überschreitet. Bei Werten dazwischen kann ein Nutzer des Kraftfahrzeugs die Drehrichtung auch alternativ durch eine geeignete Indikation, wie beispielsweise ein Betätigen in die gewünschte Richtung des Wahlhebels zur Fahrtrichtungsanzeige (kurz Blinken), sonstige Lenkradschalter, eine berührungsempfindliche Eingabe oder eine Spracheingabe, die Richtung vorgeben.

Unter innerer Seite ist insbesondere bei der Wende die Seite zu verstehen, die relativ zum Drehpunkt einen geringeren Abstand aufweist als die äußere Seite.

Insbesondere ist der Street-Turn nur dann zugelassen, wenn das Kraftfahrzeug keinen Anhänger aufweist, sowie dass eine Geschwindigkeit des Kraftfahrzeugs unter einem zu definierenden Wert, beispielsweise kleiner als 3 km/h, ist.

In einer weiteren vorteilhaften Ausgestaltungsform kann zusätzlich mittels des Fahrerassistenzsystems ein Parkmanöver zum Parken des Kraftfahrzeugs als dritter Fahrmodus bereitgestellt werden. Ferner kann ein sogenannter Rüttelmodus als zusätzlicher Fahrmodus bereitgestellt werden. Bei dem Rüttelmodus handelt es sich insbesondere um einen sogenannten "Rocking Free Modus". Es handelt sich hierbei um ein Manöver, welches durch leichte Bewegung ein Freischaukeln aus beispielsweise einem festgefahrenen Untergrund des Kraftfahrzeugs, insbesondere im Gelände, ermöglicht. Dies kann beispielsweise durch geringfügiges Vor-und Zurückbewegen der Räder, um wieder Traktion zu erhalten, realisiert werden. Eventuell kann dies auch durch kurzes gegenläufiges Drehen der Räder, um wieder Material für Traktion zu erhalten, realisiert werden.

Beim Parkmanöver kann es sich beispielsweise um ein sogenanntes agiles Parken handeln. Während des insbesondere automatischen Einparkens wird durch Zuhilfenahme unterschiedlicher Raddrehzahlen beziehungsweise Drehmomente auf den jeweiligen Seiten des Kraftfahrzeugs die Einparktrajektorie geändert. Dadurch ist es ermöglicht in Parklücken mittels eines Zugs einzuparken, die sonst mit mehreren Zügen angefahren werden müsste. Hierzu kann beispielsweise vorgesehen sein, dass die elektronische Recheneinrichtung eine Fahrlinie, also eine Einparktrajektorie, in die Parklücke bestimmt, mit der das Parkmanöver mit einem Zug gefahren werden kann. Immer dort, wo die Trajektorie durch normales Lenken nicht mehr abgefahren werden kann, hilft die unterschiedliche Raddrehzahl der Fahrzeugseiten, um das Kraftfahrzeug weiter eindrehen zu können. Insbesondere kann hierzu beispielsweise vorgesehen sein, dass der Algorithmus zum Einparken auf einer Überlagerung von zwei Funktionen basiert. Beispielsweise kann eine normale Steuerung des Kraftfahrzeugs auf Basis der Lenkung der Vorderräder realisiert werden, wobei eine zusätzliche Lenkung durch unterschiedliche Raddrehzahlen auf den beiden Fahrzeugseiten durchgeführt werden kann.

Ferner hat es sich als vorteilhaft erwiesen, wenn mittels einer berührungssensitiven Anzeigeeinrichtung des Fahrerassistenzsystems und/oder mittels einer Lenkeinrichtung des Kraftfahrzeugs und/oder mittels einer Schalteinrichtung des Kraftfahrzeugs und/oder mittels einer Spracheingabeeinrichtung als jeweilige Betätigungseinrichtung zumindest der erste oder zweite Fahrmodus eingestellt werden können. Mit anderen Worten kann ein Nutzer des Fahrerassistenzsystems über die unterschiedlichen Betätigungseinrichtungen den ersten Fahrmodus oder den zweiten Fahrmodus auswählen. Dies kann beispielsweise durch die Berührung der berührungssensitiven Anzeigeeinrichtungen realisiert werden. Ferner kann mittels einer Lenkeinrichtung, welche beispielsweise durch ein Lenkrad des Kraftfahrzeugs realisiert sein kann, der entsprechende Fahrmodus ausgewählt werden. Dies kann beispielsweise durch die Richtungsvorgabe mittels des Lenkrads realisiert werden. Insbesondere kann die Wenderichtung in Abhängigkeit des Lenkeinschlags bestimmt werden. Ferner kann vorgesehen sein, dass mittels einer Schalteinrichtung, welche beispielsweise als Gangwahlwippen bereitgestellt werden, am Lenkrad der entsprechende Fahrmodus eingestellt werden kann. Des Weiteren kann der Nutzer beispielsweise durch eine Spracheingabe mittels der Spracheingabeeinrichtung den entsprechenden Fahrmodus auswählen. Alternativ ist es auch möglich, dass mittels einer Knopfauswahl der erste oder der zumindest zweite Fahrmodus eingestellt wird. Eine Geschwindigkeitseinstellung kann beispielsweise über eine Gaspedaleinstellung beziehungsweise über die Bremse realisiert werden. Dadurch ist es ohne zusätzliche Bauteile im Kraftfahrzeug ermöglicht den ersten Fahrmodus oder den zweiten Fahrmodus durchzuführen.

In einer weiteren vorteilhaften Ausgestaltungsform wird das Kraftfahrzeug als zumindest teilweise geländegängiges Kraftfahrzeug bereitgestellt. Insbesondere im Gelände ist das Wenden auf engen Raum notwendig. Insbesondere durch das erfindungsgemäße Verfahren kann somit im Gelände ein verbessertes Wenden realisiert werden, sodass ein verbesserter Betrieb des insbesondere als zumindest teilweise geländegängigen Kraftfahrzeugs realisiert werden kann.

Gemäß einer weiteren vorteilhaften Ausgestaltungsform können ein Lenkeinschlag einer Lenkeinrichtung des Kraftfahrzeugs und/oder eine Neigung des Kraftfahrzeugs relativ zu einem Untergrund, auf welchem sich das Kraftfahrzeug befindet, bei der Erzeugung der vier Ansteuerungssignale mit berücksichtigt werden. Insbesondere kann sowohl ein aktueller Lenkeinschlag des Kraftfahrzeugs, welcher beispielsweise durch den Nutzer bereits eingeschlagen wurde, berücksichtigt werden. Ferner kann auch berücksichtigt werden, ob beispielsweise beim Parkmanöver mittels des Fahrerassistenzsystem ein aktives Einlenken beispielsweise der zwei Vorderräder zu nutzen ist, um den entsprechenden Wendekreis realisieren zu können. Dadurch ist es ermöglicht, dass das Kraftfahrzeug mit einer verbesserten Manövrierfähigkeit bereitgestellt werden kann. Ferner kann vorgesehen sein, dass mittels einer Erfassungseinrichtung des Kraftfahrzeugs eine Umgebung des Kraftfahrzeugs erfasst wird und die erfasste Umgebung beim Erzeugen der vier Ansteuerungssignale mit berücksichtigt wird. Insbesondere kann beispielsweise mittels einer Kameraeinrichtung als Erfassungseinrichtung die Umgebung des Kraftfahrzeugs erfasst werden. Dadurch kann beispielsweise realisiert werden, dass die Straßenseite und die Straßenbreite, auf welcher sich das Kraftfahrzeug befindet, erkannt beziehungsweise erfasst wird, wodurch dann wiederum ein Drehpunkt zum Wenden bestimmt werden kann. Insbesondere bei einem 180° Wendemanöver, kann dadurch verbessert der Drehpunkt bestimmt werden. Des Weiteren kann mittels der Erfassungseinrichtung eine Überwachung der Umgebung realisiert werden, sodass gegebenenfalls eine Warnung oder ein Stoppen des Wendevorgangs erfolgen kann, sollte festgestellt werden, dass durch den Wendekreis das Kraftfahrzeug mit etwas kollidieren könnte. Insbesondere kann die Umgebung beispielsweise auf der Anzeigeeinrichtung angezeigt werden, wobei insbesondere eine sogenannte Vogelperspektive mit dem Kraftfahrzeug und dem entsprechenden Drehpunkt und der Trajektorie angezeigt werden kann.

Weiterhin vorteilhaft ist, wenn mittels einer Anzeigeeinrichtung des Fahrerassistenzsystems zumindest ein den eingestellten Fahrmodus charakterisierender Parameter auf der Anzeigeeinrichtung angezeigt wird. Insbesondere kann somit der Fahrmodus zusammen mit der 360°-Kameraperspektive oder verschiedene Einstellungen der einzelnen Fahrmodi angezeigt werden. Dadurch ist es komfortabel für einen Nutzer möglich das Kraftfahrzeug zu betreiben.

Weiterhin vorteilhaft ist, wenn als der den eingestellten Fahrmodus charakterisierende Parameter ein Drehpunkt und/oder eine Fahrmodusgeschwindigkeit und/oder ein Drehradius angezeigt wird, wobei insbesondere der den eingestellten Fahrmodus charakterisierende Parameter durch einen Nutzer eingestellt wird. Beispielsweise kann eine Geschwindigkeit des Fahrmodus durch den Nutzer eingestellt werden. Insbesondere wird der Drehpunkt auf der Anzeigeeinrichtung dargestellt, sodass der Nutzer angezeigt bekommt, wie das Fahrzeug nach dem Fahrmodus relativ, beispielsweise zur Straße, positioniert ist. Dadurch ist es für den Nutzer ermöglicht die Planung des Fahrmodus durchzuführen. Des Weiteren kann beispielsweise der Nutzer die Umgebung entsprechend beobachten und beispielsweise einen Zeitpunkt entscheiden, wann der Fahrmodus beginnen kann, ohne die Sicherheit im Straßenverkehr zu gefährden. Insbesondere kann hierzu der aktuelle Drehpunkt und/oder der gewünschte Drehpunkt in Bezug zum Kraftfahrzeug, am vorteilhaftesten in der Vogelperspektive, mit der Umgebung, dargestellt werden. Insbesondere können die Einstellungen entsprechend verändert werden, indem beispielsweise eine Verschiebung des Drehpunktes durch den Nutzer durchgeführt wird.

Des Weiteren ist vorteilhaft, wenn zumindest der erste Fahrmodus und/oder zumindest der zweite Fahrmodus in Abhängigkeit eines Abbruchkriteriums abgebrochen wird. Mit anderen Worten kann vorgesehen sein, dass der Fahrmodus abgebrochen wird, sollte ein entsprechendes Abbruchkriterium erfüllt sein. Beispielsweise kann ein jeweiliger Fahrmodus abgebrochen werden, sollte durch einen engeren Wendekreis das Kraftfahrzeug mit etwas kollidieren können. Zudem sollten manche Fahrmodi nur in entsprechenden Umgebungen angeboten werden, beispielsweise sollte der Offroad-Turn lediglich im Gelände erlaubt sein, während das Parkmanöver bei der erfassten Parklücke genutzt werden kann. Als weiteres Abbruchkriterium kann beispielsweise angesehen werden, dass der Rüttelmodus lediglich im Gelände bereitgestellt werden kann.

Ein weiterer Aspekt der Erfindung betrifft ein Fahrerassistenzsystem für ein zumindest teilweise elektrisch betreibbares Kraftfahrzeug mit zumindest einer elektronischen Recheneinrichtung und mit einer Betätigungseinrichtung, wobei das Fahrerassistenzsystem zum Durchführen eines Verfahrens nach dem vorhergehenden Aspekt ausgebildet ist. Insbesondere wird das Verfahren mittels des Fahrerassistenzsystems durchgeführt.

Ein nochmals weiterer Aspekt der Erfindung betrifft ein Kraftfahrzeug mit einem Fahrerassistenzsystem nach dem vorhergehenden Aspekt und mit vier voneinander unabhängig antreibbaren Rädern. Das Kraftfahrzeug ist insbesondere zumindest teilweise als geländegängiges Kraftfahrzeug ausgebildet und zumindest teilweise elektrisch betreibbar

Vorteilhafte Ausgestaltungsformen des Verfahrens sind als vorteilhafte Ausgestaltungsformen des Fahrerassistenzsystems sowie des Kraftfahrzeugs anzusehen. Das Fahrerassistenzsystem sowie das Kraftfahrzeug weisen dazu gegenständliche Merkmale auf, welche eine Durchführung des Verfahrens oder eine vorteilhafte Ausgestaltungsform davon ermöglichen.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Draufsicht auf eine Ausführungsform eines Kraftfahrzeugs in einem ersten Fahrmodus;
- Fig. 2: eine weitere schematische Draufsicht auf eine Ausführungsform des Kraftfahrzeugs in einem zweiten Fahrmodus; und
- Fig. 3: eine weitere schematische Draufsicht auf eine Ausführungsform des Kraftfahrzeugs in einem dritten Fahrmodus.

In den Figuren sind gleich oder funktionsgleiche Elemente mit den gleichen Bezugszeichen versehen.

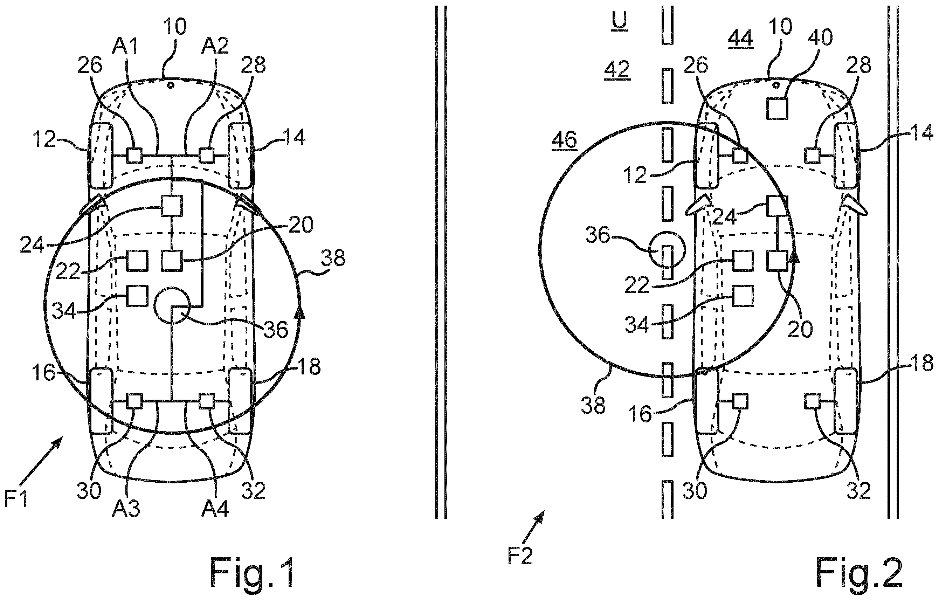

Fig. 1 zeigt in einer schematischen Draufsicht eine Ausführungsform eines Kraftfahrzeugs 10. Das Kraftfahrzeug 10 ist insbesondere als zumindest teilweise geländegängiges Kraftfahrzeug 10 bereitgestellt.

Das Kraftfahrzeug 10 weist ein erstes Rad 12, ein zweites Rad 14, welche zusammen die Vorderräder 12,14 bilden, auf. Ferner weist das Kraftfahrzeug 10 ein drittes Rad 16 sowie ein viertes Rad 18 auf, wobei das dritte Rad 16 und das vierte Rad 18 die Hinterräder 16, 18 ausbilden.

Beim Verfahren zum Betreiben eines Fahrerassistenzsystems 20 des zumindest teilweise elektrisch betreibbaren Kraftfahrzeugs 10 werden mittels eines ersten Ansteuerungssignals A1 das erste Rad 12, mittels eines zweiten Ansteuerungssignals A2 das zweite Rad 14, mittels eines dritten Ansteuerungssignals A3 das dritte Rad 16 und mittels eines vierten Ansteuerungssignals A4 das vierte Rad 18 angetrieben. In Abhängigkeit der vier Ansteuerungssignale A1, A2, A3, A4 wird ein erster Fahrmodus F1 für das Kraftfahrzeug 10 bereitgestellt.

Es ist vorgesehen, dass in Abhängigkeit der vier Ansteuerungssignale A1, A2, A3, A4 zumindest ein zweiter Fahrmodus F2 (Fig. 2) bereitgestellt wird, wobei der erste Fahrmodus F1 oder der zweite Fahrmodus F2 mittels einer Betätigungseinrichtung 22 des Fahrerassistenzsystems 20 durch eine einzige Nutzereingabe eingestellt wird, und die vier Ansteuersignale A1, A2, A3, A4 in Abhängigkeit der Nutzereingabe mittels einer elektronischen Recheneinrichtung 24 des Fahrerassistenzsystems 20 zum Ansteuern der vier Räder 12,14, 16,18, in Abhängigkeit des eingestellten Fahrmodus F1, F2 erzeugt werden.

Unter dem ersten Fahrmodus F1 und dem zweiten Fahrmodus F2 ist insbesondere ein jeweiliges Fahrmanöver, also die Bewegung des Kraftfahrzeugs 10, zu verstehen.

Insbesondere kann vorgesehen sein, dass mittels der vier Ansteuersignale A1, A2, A3, A4 jeweils unterschiedliche Drehzahlen und/oder Drehmomente und/oder Bewegungsrichtungen der vier Räder 12, 14, 16, 18 eingestellt werden. Des Weiteren kann vorgesehen sein, dass ein jeweiliges Rad 12, 14, 16, 18 mittels einem jeweiligem dem Rad 12, 14, 16, 18 zugeordneten elektrischen Motor 26, 28, 30, 32 angetrieben wird. Insbesondere wird gemäß Fig. 1 das erste Rad 12 mit einem ersten elektrischen Motor 26 angetrieben. Das zweite Rad 14 wird mittels eines zweiten elektrischen Motors 28 angetrieben. Das dritte Rad 16 wird mittels eines dritten elektrischen Motors 30 angetrieben. Das vierte Rad 18 wird mittels eines vierten elektrischen Motors 32 angetrieben.

Ferner kann vorgesehen sein, dass mittels einer berührungssensitiven Anzeigeeinrichtung 34 des Fahrerassistenzsystems 20 und/oder mittels einer Lenkeinrichtung des Kraftfahrzeugs 10 und/oder mittels einer Schalteinrichtung des Kraftfahrzeugs 10 und/oder mittels einer Spracheingabeeinrichtung als jeweilige Betätigungseinrichtung 22 zumindest der erste oder der zweite Fahrmodus F1, F2 eingestellt werden.

Es ist vorgesehen, dass mittels des Fahrerassistenzsystems 20 das Kraftfahrzeug 10 zumindest teilweise autonom, insbesondere vollautonom, in dem zumindest ersten Fahrmodus F1 und/oder zumindest zweiten Fahrmodus F2 betrieben wird.

Ferner kann vorgesehen sein, dass mittels der Anzeigeeinrichtung 34 des Fahrerassistenzsystems 20 zumindest ein den eingestellten Fahrmodus F1, F2 charakterisierende Parameter auf der Anzeigeeinrichtung 34 angezeigt wird. Insbesondere kann als der den eingestellten Fahrmodus F1, F2 charakterisierende Parameter ein Drehpunkt 36 und/oder eine Fahrmodusgeschwindigkeit und/oder ein Drehradius 38 angezeigt werden, wobei insbesondere der den eingestellten Fahrmodus F1, F2 charakterisierende Parameter durch einen Nutzer eingestellt wird.

Die Fig. 1 zeigt, dass als erster Fahrmodus F1 ein erstes Wendemanöver des Kraftfahrzeugs 10 bereitgestellt wird.

Bei dem ersten Wendemanöver kann es sich insbesondere um eine Wende des Kraftfahrzeugs 10 im Gelände handeln. Der erste Fahrmodus F1 kann auch als auf Offroad-Turn bezeichnet werden. Beim Offroad-Turn drehen das erste Rad 12 und das dritte Rad 16 in eine erste Richtung und das zweite Rad 14 und das vierte Rad 18 drehen in die entgegengesetzte Richtung. Es kann dann beispielsweise eine Linksdrehung des Kraftfahrzeugs 10 realisiert werden, indem die linke Seite, insbesondere die Räder 12, 16 der linken Seite, des Kraftfahrzeugs 10 in Längsrichtung des Kraftfahrzeugs 10 betrachtet und in eine Hauptfahrrichtung des Kraftfahrzeugs 10 betrachtet rückwärts dreht und die rechte Seite, insbesondere die Räder 14, 18 der rechten Seite, vorwärts dreht. Eine Rechtsdrehung kann beispielsweise durch das Drehen der rechten Seite rückwärts und der linken Seite vorwärts realisiert werden. Dadurch kann eine hohe Wendigkeit im Gelände, insbesondere bei geringem Platzbedarf realisiert werden. Dabei befindet sich die Drehachse, also der Drehpunkt 36, bei gleicher Traktion genau im Schnittpunkt der Verbindungslinien aller Räder 12, 14, 16, 18. Insbesondere drehen alle Räder 12,14, 16,18 in einer gleichen Geschwindigkeit. Die Vorderräder 12, 14 befinden sich in Geradeausstellung. Insbesondere kann vorgesehen sein, dass der erste Fahrmodus F1 nicht für eine Straße 42 (Fig. 2) geeignet ist, da der Drehpunkt 36 in der Mitte einer Fahrspur 44 (Fig. 2) liegen würde. Selbst bei erfolgreichem Manöver mit ausreichend Platz steht das Kraftfahrzeug 10 somit später auf der falschen Spur. Daher ist vorgesehen, dass das Manöver lediglich im Gelände zugelassen ist.

Das erste Fahrmodus F1 kann beispielsweise durch eine Taste gestartet werden, sobald entsprechende Bedingungen erfüllt sind. Es wird vorgesehen, dass kein Anhänger am Kraftfahrzeug 10 angehängt sein soll, und/oder dass mittels einer Navigationseinrichtung des Kraftfahrzeugs 10 erkannt wird, ob sich das Kraftfahrzeug 10 im Gelände befindet. Sollte sich das Kraftfahrzeug 10 im Gelände befinden, so kann der erste Fahrmodus F1 durchgeführt werden. Alternativ oder zusätzlich muss die Geschwindigkeit des Kraftfahrzeugs 10 unter einen zu definierenden Wert liegen, sodass das erste Fahrmodus F1 durchgeführt werden kann. Sollten diese Bedingungen nicht erfüllt sein, so kann auf der Anzeigeeinrichtung 34 angezeigt werden, dass Manöver nicht möglich ist. Weitere Freigabebedingungen können beispielsweise vom Bordnetz, von einer funktionalen Sicherheit, Produkthaftung oder von einem Userinterface kommen. Sofern alle Bedingungen erfüllt sind, liegt die funktionelle Freigabe zur Manöveraktivierung vor.

Es kann im ersten Schritt vorgesehen sein, dass jedes der Räder 12, 14, 16, 18 blockiert und das Kraftfahrzeug 10 zum Stillstand bringt. Es kann dann eine Bestätigung durch eine Funktion-LED und der Kombimeldung mit Hinweis auf den nächsten Schritt erfolgen. Es kann dann auf der Anzeigeeinrichtung 34 beispielsweise eine Inszenierung des ersten Fahrmodus F1 durchgeführt werden. Insbesondere kann mittels einer Erfassungseinrichtung 40 (Fig. 2), welche insbesondere als Kamera ausgebildet sein kann, eine 360° Ansicht bereitgestellt werden, sodass insbesondere eine Vogelperspektive-Inszenierung des Fahrmodus F1 angezeigt werden kann. Das Lenkrad dreht sich in Nullstellung und bringt dabei die Vorderräder 12, 14 in die Geradeausstellung. Insbesondere kann vorgesehen sein, dass die Winkelgeschwindigkeit der Drehung der Räder 12, 14, 16, 18 dabei eine Rampe abfährt, sodass es für den Nutzer als sanfter Start und Ende der Drehung wahrgenommen wird. Sobald die Nullstellung erreicht ist, erscheint im Kombiinstrument, insbesondere auf der Anzeigeeinrichtung 34, die Aufforderung nach Vorgabe der Richtung für den ersten Fahrmodus F1. Es kann dann die Richtungsvorgabe durch beispielsweise das Lenkrad des Kraftfahrzeugs 10 oder durch den Fahrtrichtungsanzeiger des Kraftfahrzeugs 10, welcher auch den Blinkerschalter bezeichnet werden kann, durchgeführt werden. Beim Lenkrad kann beispielsweise eine elektrische Lenkung eine Kraft erkennen, welche das Lenkrad aus der 12:00 Uhr Stellung in die Vorgaberichtung bringen will. Dem Druck wird ab einem zu definierenden Schwellendrehmoment nachgegeben, sodass sich eine definierte maximale Winkeländerung einstellen kann, so dass dann ein erhöhtes Drehmoment als Widerstand der Lenkung aktiv wird. Dadurch kann eine haptische Rückmeldung für den Nutzer erzeugt werden. Die Richtungsvorgabe wird erkannt, solange die notwendige Kraft zur Aufrechterhaltung des Schwellendrehmoments aufgebracht wird. Es kann dabei eine Rückmeldung auf der Anzeigeeinrichtung 34 mit der Inszenierung der Richtungswahl durchgeführt werden. Es kann dann auf der Anzeigeeinrichtung 34 eine Meldung erscheinen, die angibt, dass die Richtungsvorgabe eingehalten werden kann. Das Gaspedal kann zum Start des ersten Fahrmodus F1 betätigt werden. Ebenso ist es möglich, dass je nach Ausgestaltung des Systems bereits die Lenkrichtungsvorgabe in Verbindung mit der kraftsensitiven Messung des Drehmoments oder des Drehwinkels am Lenkrad als Vorgabe für die Aktivierung und den Start des Manövers verwendet werden kann. Bei unterschreiten des Schwellendrehmoments erscheint im Kombiinstrument die Meldung nach Richtungsvorgabe, bis wieder der alte Zustand mit Funktionsfreigabe oberhalb des Schwellwerts erreicht ist.

Durch Betätigen des Fahrtrichtungsanzeigers kann alternativ die zu drehende Richtung angegeben werden. Eine Rückmeldung kann über die Anzeigeeinrichtung 34 mit der Inszenierung des ersten Fahrmanövers F1 erfolgen. Solange der Fahrtrichtungsanzeiger in der Stellung einer Fahrtrichtungsvorgabe gelegt ist, liegt auch die Funktionsfreigabe für den nächsten Schritt vor. Es kann ferner auch durch die berührungssensitive Anzeigeeinrichtung 34 die Bedienung erfolgen. Durch die Auswahleinrichtungsoption auf der Anzeigeeinrichtung 34 kann alternativ zur Bedienung über das Lenkrad die zu fahrende Richtung angegeben werden. Solange die Auswahl nicht abgewählt wird, liegt auch die Funktionsfreigabe für nächsten Schritt vor. Es kann eine Rückmeldung auf der Anzeigeeinrichtung 34 mit der Inszenierung des ersten Fahrmanövers F1 erfolgen. Insbesondere erscheint im Anschluss daran die Meldung, dass die entsprechende Vorrichtung zur Durchführung des Fahrmanövers betätigt werden soll, so dass zum Beispiel das Gaspedal betätigt werden soll, sofern die Durchführung des Verfahrens für das Fahrmanöver die Betätigung eines Gaspedal beinhaltet. Alternativ kann mittels der Spracheingabeeinrichtung eine Auswahl erfolgen, sofern die Auswahl aktiv ist, reagiert die Sprachbedienung auf den Befehl beispielsweise rechts oder links und kann die Vorgabe bestätigen. Solange die Auswahl nicht abgewählt wird, liegt auch die Funktionsfreigabe für nächsten Schritt vor.

Nochmals alternativ kann auch die Richtungsvorgabe durch die Schalteinrichtung, insbesondere durch ein Schaltpaddel, also einem Gangwahlhebel, insbesondere am Lenkrad, durchgeführt werden.

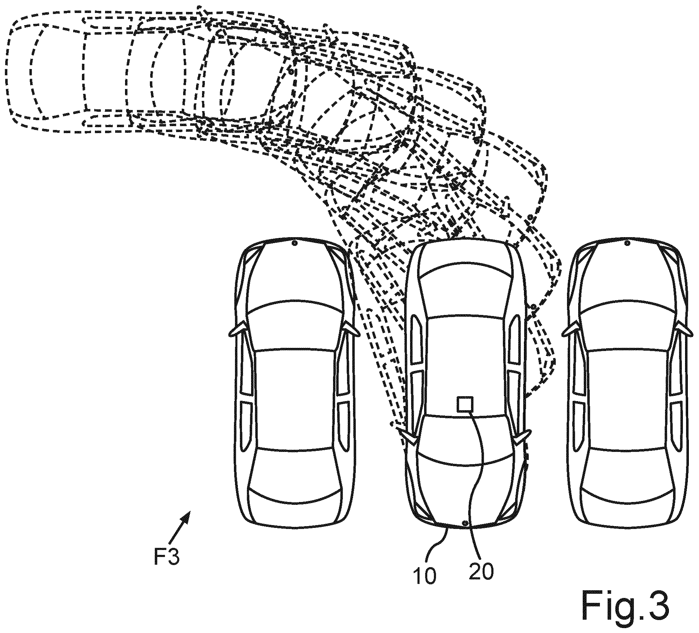

Mit dem Gaspedal kann dann die Ausführung des ersten Fahrmodus F1 durchgeführt werden. Mittels des Gaspedals kann der erste Fahrmodus F1 somit letztendlich gestartet werden. Die Gaspedalstellung kann durch Durchlaufen einer Rampenfunktion einer zu definierenden Drehgeschwindigkeit zugeordnet werden. Sollte beispielsweise der Nutzer das Gaspedal nicht mehr betätigen, so kann eine sanfte Verzögerung des Kraftfahrzeugs 10 eingeleitet werden, und beispielsweise eine Rekuperation durchgeführt werden, sodass es wenig Nachlaufen gibt. Mit erneuter Gaspedalbewegung kann das Kraftfahrzeug 10 weiter bewegt werden, sofern die Freigabebedingungen für diesen Schritt weiterhin vorliegen. Aus der Grundstellung heraus wird wieder die sanfte Anfahrrampe durchlaufen. Die Freigabeschritte müssen insbesondere kaskadisch ausgeführt werden. Die Wegnahme eines Schrittes bricht nicht das gesamte Manöver ab, sondern es erfolgt die neue Aktivierung des Schrittes. Der erste Fahrmodus F1 wird jedoch insbesondere in jedem Zustand durch erneutes Drücken der dezidierten Manövertaste abgebrochen. Der erste Fahrmodus F1 muss insbesondere über erneutes Drücken der zum ersten Fahrmodus F1 gehörigen Taste aktiv beendet werden, damit ein anderer Fahrmodus F1, F2 (Fig. 2), F3 (Fig. 3) angewählt werden kann. Insbesondere kann vorgesehen sein, dass sobald die Manöveranforderung über die jeweilige Eingabe weggenommen wird, auch die Lenkung nicht mehr blockiert ist und das Kraftfahrzeug 10 normal, beispielsweise für einen regulären Fahrbetrieb des Kraftfahrzeugs 10, reagiert.

Alternativ kann das Manöver anstatt durch eine Betätigung des Gaspedals auch über eine kraftsensitive Auswertung des Lenkdrehmoments erfolgen. Diese Variante beinhaltet dann zum Beispiel die Schritte Richtungsvorgabe und Start des Manövers.

Ferner kann beispielsweise vorgesehen sein, dass der erste Fahrmodus F1 angehalten wird, sofern eine Voraussetzung für den ersten Fahrmodus F1 nicht erfüllt ist. Dies kann beispielsweise erfüllt sein, sollte eine Richtungsvorgabe nicht mehr vorliegend sein oder sollte das Gaspedal nicht mehr gedrückt sein. Ein Abbruch des ersten Fahrmodus F1 kann ferner durchgeführt werden, sollte der Schalterzustand über ein erneutes Drücken abgebrochen werden. Es kann dann eine Funktions-LED erlöschen. Ferner kann auch über Sprachbefehl eingeben werden, dass der erste Fahrmodus F1 abzubrechen ist. Hierzu kann dann beispielsweise das Fahrerassistenzsystem 20 dazu ausgebildet sein, eine Rückmeldung für den Nutzer zu geben, dass der erste Fahrmodus F1 abgebrochen wurde.

Fig. 2 zeigt das Kraftfahrzeug 10 in einer schematischen Draufsicht während des zweiten Fahrmodus F2. Der zweite Fahrmodus F2 ist insbesondere ein Wendemanöver, was zum ersten Wendemanöver, also dem Offroad-Turn, unterschiedlich ist. Insbesondere handelt es sich dabei um ein Wendemanöver des Kraftfahrzeugs 10 auf einer Straße 42. Die Straße 42 weist dabei eine erste Fahrspur 44 auf, auf welcher sich das Kraftfahrzeug 10 aktuell befindet und eine zweite Fahrspur 46, welche als Gegenspur bezeichnet werden kann. Bei dem zweiten Fahrmodus F2 kann insbesondere ein Lenkeinschlag einer Lenkeinrichtung des Kraftfahrzeugs 10 und/oder eine Neigung des Kraftfahrzeugs 10 relativ zu einem Untergrund, auf welchem sich das Kraftfahrzeug 10 befindet, bei der Erzeugung der vier Ansteuerungssignale A1, A2, A3, A4 mit berücksichtigt werden. Ferner zeigt die Fig. 2, dass mittels der Erfassungseinrichtung 40 des Kraftfahrzeugs 10 eine Umgebung U des Kraftfahrzeugs 10 erfasst wird und die erfasste Umgebung U beim Erzeugen der vier Ansteuerungssignale A1, A2, A3, A4 mit berücksichtigt wird. Der zweite Fahrmodus F2, welche das Wenden auf der Straße 42 beschreibt, kann insbesondere auch als Street-Turn bezeichnet werden.

Analog zum Offroad-Turn können die einzelnen Schritte durchgeführt werden. Beim Street-Turn drehen sich die Räder 12, 16 mit einer ersten Geschwindigkeit und die Räder 14, 18 drehen sie mit einer zweiten Geschwindigkeit, wobei sich alle vier Räder 12, 14, 16, 18 in eine gleiche Richtung bewegen. Eine Linksdrehung kann dadurch erfolgen, dass sich die Räder 12, 16 langsam bis gar nicht drehen, während die Räder 14, 18 schnell drehen. Eine Rechtsdrehung kann dadurch realisiert werden, dass die Räder 14,18 langsam bis gar nicht drehen, während die Räder 12,16 schnell drehen. Bei diesem Beispiel handelt es sich um eine Wende in Vorausrichtung. Alternativ kann sich das Kraftfahrzeug 10 auch in Rückwärtsbewegung drehen. Dadurch kann eine hohe Wendigkeit im Straßenverkehr realisiert werden. Wenn die Räder 12, 14, 16, 18 der einen Seite gar nicht drehen, liegt die Drehachse, mit anderen Worten der Drehpunkt 36, im Schnittpunkt der beiden Radauflageflächen, der nicht-drehenden Seite. Dadurch kann ein Reifenverschleiß erhöht werden. Insbesondere ist daher vorgesehen, dass ein geringfügiges Mitdrehen der anderen Räder 12, 14, 16, 18 in diesem Ausführungsbeispiel also der Seite zur Fahrbahninnenseite, mit durchgeführt wird. Das Drehzahlverhältnis der Reifen 12, 14, 16, 18 zueinander kann insbesondere durch die Bestimmung des Drehpunkts 36 als vertikaler Abstand vom Mittelpunkt der Räder 12, 16 in diesem Ausführungsbeispiel für das Manöver, also dem zweiten Fahrmodus F2, bestimmt werden. Des Weiteren sind insbesondere Fahrbahnbreite und eine bekannte Breite des Kraftfahrzeugs 10 zur Bestimmung notwendig. Insbesondere ergibt sich daraus, dass bei sehr engen Fahrbahnen 42 und einer Position des Kraftfahrzeugs 10 direkt neben einem Mittelstreifen der Fahrbahn 42 der Drehpunkt 36 tatsächlich nahe zwischen den Reifen 12, 16 in diesem Ausführungseispiel liegen sollte. Die Drehung der inneren Räder 12, 16 ist zu minimieren und dient insbesondere dann rein dem Schutz der Räder 12, 16 vor Verschleiß.

Insbesondere kann vorgesehen sein, dass mit dem Drehen der inneren Räder 12, 16 ein innerer Kreis beschrieben wird, um welchen sich das Kraftfahrzeug 10 dreht. Wenn das Kraftfahrzeug 10 ganz links in der Fahrspur 44 steht und die Spurweite am Minimum ist, dann ergibt sich aus der Fahrzeugbreite ein maximaler innerer Kreisdurchmesser, um vom Mittelpunkt der Radauflage ausgehen zu können. Im Gegensatz zum Offroad-Turn können bei dem zweiten Fahrmodus F2 die Vorderräder 12, 14 nicht zwangsläufig in die Nulllage gebracht werden, insbesondere einen Lenkeinschlag durchführen. Sollten dann die Vorderräder 12, 14 nicht geradeaus stehen, sondern in Richtung der Fahrbahnmitte, dann verkürzt sich der Durchmesser des inneren Kreises und damit auch der des äußeren Kreises. Die engere Führung ist ein gewünschter Effekt bei engen Straßen und wird zu gelassen. Der Effekt muss bei der Erkennung der Fahrspuren 44, 46 und der Position des Kraftfahrzeugs 10 berücksichtigt werden. Wenn keine Erkennung der Straßensituation vorliegt, dann wird der Lenkeinschlag als Richtungsvorgabe verwendet. Die Lenkeinrichtung gibt an die Räder 12, 16 der Innenseite vor, dass diese mit beispielsweise maximal 15 % der Geschwindigkeit der äußeren Räder 14, 18 drehen. Eine klare Richtungsangabe liegt vor, wenn der Lenkeinschlag einen zu definierenden Drehwinkel überschreitet. Bei Werten dazwischen muss der Nutzer die Drehrichtung selbst vorgeben. Die einzelnen Schritte zur Durchführung des Street-Turns sind analog den Schritten zum Durchführen des Offroad-Turns.

Insbesondere kann durch die Nutzung der Erfassungseinrichtung 40, insbesondere durch die Nutzung von Kameras an Bord des Kraftfahrzeugs 10, die Breite der Straße. 42, sowie die Lage des Kraftfahrzeugs 10 innerhalb der jeweiligen Fahrspur 44, 46 bestimmt werden. Es ist nun möglich, die Drehung so zu gestalten, dass das Kraftfahrzeug 10 nach dem zweiten Fahrmodus F2 in der Mitte der Fahrspur 46 steht. Durch eine spezifisch ermittelte Drehzahl der inneren Räder 12, 16 gegenüber der äußeren Räder 14, 18 kann über eine Halbkreisbahn innerhalb der Drehung ein Weg in Richtung der inneren Seite überbrückt werden.

Befindet sich das Kraftfahrzeug 10 mit einem Lenkeinschlag auf der Straße 42 handelt es sich um eine überlagerte Bewegung aus dem Fall ohne Lenkeinschlag und dem durch die Lenkung abgefahrenen Spurkreis. Insbesondere ist dadurch eine Korrektur notwendig. Insbesondere kann zur Korrektur der Lenkwinkel, der Schräglaufwinkel, die Giergeschwindigkeit sowie ein Schwimmwinkel mit berücksichtigt werden.

Alternativ kann vorgesehen sein, dass der Nutzer selbst den Drehpunkt 36 beispielsweise über die berührungssensitive Anzeigeeinrichtung 34 festlegen kann. Das Fahrerassistenzsystem 20 kann insbesondere in Echtzeit eine daraus entstehende Trajektorie bestimmen und diese dem Nutzer entsprechend vorschlagen und beispielsweise auf der Anzeigeeinrichtungen 34 anzeigen.

Alternativ kann als weiterer Fahrmodus ein Rüttelmodus bereitgestellt werden. Bei dem Rüttelmodus, welcher insbesondere im Gelände durchgeführt werden kann und beispielsweise auch Rocking-Free Modus bezeichnet wird, handelt es sich um ein automatisches Programm, welches durch leichte Bewegungen ein Freischaukeln aus festgefahrenen Untergrund ermöglicht. Dies kann beispielsweise durch die Kombination erfolgen, dass ein geringfügiges Vor-, und Zurückbewegen der Räder 12, 14, 16, 18, durchgeführt wird, so dass die Räder 12, 14, 16, 18 wieder Traktion erhalten. Ferner kann auch ein kurzes gegenläufiges Drehen der Räder 12, 14, 16, 18, um wieder Traktion zu erhalten, durchgeführt werden.

Fig. 3 zeigt in einer schematischen Draufsicht eine Ausführungsform des Kraftfahrzeugs 10 bei einem dritten Fahrmodus F3. Der dritte Fahrmodus F3 ist insbesondere ein Parkmanöver zum Parken des Kraftfahrzeugs 10.

Während des Parkvorganges, welcher insbesondere zumindest teilweise autonom, insbesondere vollautonom, durchgeführt wird, erfolgt das Einparken unter der Zuhilfenahme unterschiedlicher Raddrehzahlen auf den jeweiligen Fahrzeugseiten, sodass der Einfahrwinkel variiert wird. Somit ist es möglich, im dritten Fahrmodus F3 in Parklücken mit einem Zug zu parken, die sonst mit mehreren Zügen angefahren werden müssten. Das Kraftfahrzeug 10, insbesondere die elektronische Recheneinrichtung 24, bestimmt eine Fahrlinie für die Parklücke mit welcher der dritte Fahrmodus F3 in einem Zug gefahren werden kann. Immer dort, wo die Fahrlinie durch normales Lenken nicht mehr abgefahren werden kann, bestimmt die elektronische Recheneinrichtung 24 eine unterschiedliche Raddrehzahl der Räder 12, 14, 16, 18, auf den jeweiligen Fahrzeugseiten, um das Kraftfahrzeug 10 weiter eindrehen zu können.

Insbesondere basiert dieser Algorithmus auf der Überlagerung von zwei Funktionen. Es kann eine normale Steuerung des Kraftfahrzeugs 10 auf Basis der Lenkung der Vorderräder 12,14 als durchgeführt werden. Eine solche Lenkung kann durch die Raddrehzahl auf den beiden Fahrzeugseiten realisiert werden. Insbesondere bestimmt hierzu die elektronische Rechnerrechnung 24 zumindest drei Funktionen. Insbesondere wird eine Ideallinie, die Parklücke anzufahren, als die erste Funktion bestimmt. Es wird ferner eine Linie bestimmt, welche durch normale Lenkbewegungen als zweite Funktion möglich ist. Aus der Subtraktion der beiden Funktionen ergibt sich eine notwendig resultierende dritte Funktion. Diese dritte Funktion ist die Vorgabe für die Lenkung durch unterschiedliche Raddrehzahl der beiden Seiten. Am Anfang werden die Lenkfunktionen für normale Lenkung und die Längsreglerschnittstelle verwendet, und zuletzt die dritte Funktion zur Steuerung der Raddrehzahl. Beides läuft insbesondere simultan während des Parkmanövers ab.

Das erfindungsgemäße Parkmanöver, also der dritte Fahrmodus F3, ist insbesondere eine Funktionserweiterung des normalen Parkens. Insbesondere kann eine Auswahl über das Parkmanövermenü erfolgen. Wenn die Parklücke in einem Zug ohne eine entsprechende Stütze angefahren werden kann, wird auch die Option nicht angezeigt. Im anderen Fall kann der Nutzer wählen, die Parklücke normal oder mit einer jeweiligen Unterstützung anzufahren. Das Fahrerassistenzsystem 20 schätzt hierzu die Anzahl der Züge zum normalen Einparken ab und wie viele durch die Nutzung der unterschiedlichen Raddrehzahlen notwendig sind. Insbesondere kann dies auch auf der Anzeigeeinrichtung 34 angezeigt werden. Eine entsprechende Inszenierung des dritten Fahrmodus F3 kann ebenfalls auf der Anzeigeeinrichtung 34 angezeigt werden.

In einer weiteren Ausprägung kann der Fahrer beispielsweise in dem Fahrzeug die Option "Torque Vectoring", insbesondere über einen Schalter oder ein Menü des Bediensystems auswählen und bei einem Parkvorgang, der dann direkt oder auch an einem späteren Zeitpunkt während der Aktivierung der Option "Torque Vectoring" erfolgen kann, wird dieser dann immer über den dritten Fahrmodus F3 stattfinden. Somit muss zum Parken vom Fahrer nicht noch einmal separat der dritte Fahrmodus F3 ausgewählt oder bestätigt werden, falls dies notwendig wäre um die Parklücke in einem Zug befahren zu können. Beim Start des Parkvorgangs erfolgt in diesem Fall eine Unterstützung gemäß des dritten Fahrmodus F3 der Vorgang mit unterschiedlicher Raddrehzahlen automatisch und die Anzeigeeinrichtung 34 zeigt dies entsprechend an.

Es kann ferner vorgesehen sein, dass auch während einem normalen Fahrbetrieb des Kraftfahrzeugs 10 die unterschiedliche Ansteuerung der Räder 12, 14, 16, 18 genutzt wird. Es kann sich dabei beispielsweise um ein sogenanntes agiles Steuern handeln. Das agile Steuern erlaubt ein dynamisches Fahren durch unterschiedliche Drehgeschwindigkeiten der Räder 12, 14, 16, 18 während des regulären Fahrbetriebs. So wird, in Abhängigkeit von der Fahrgeschwindigkeit des Kraftfahrzeugs 10, den kurvenäußeren Rädern 12, 14, 16, 18 mehr Drehmoment zugeteilt, so dass bereits durch die unterschiedliche Verteilung des Drehmoments eine Lenkbewegung erfolgt. Die Zuteilung des Drehmoments beginnt mit einem Maximalwert und endet mit einer zu definierenden Geschwindigkeit, bei der die Drehmomentunterschiede zwischen den Fahrzeugseiten dann auf null zurückgehen. Dadurch kann eine höhere Dynamik auf der Straße realisiert werden.

Insbesondere kann ein Torque Vectoring bei niedrigen Geschwindigkeiten entsprechend der Ansteuerung durch Relativdrehzahlen der Räder geringere Wendekreise ermöglichen, wobei dies aber bei höheren Geschwindigkeiten über die Ansteuerung verringert wird. Beispielsweise kann das Systems über ein Schalter im Bereich der Mittelkonsole oder des Cockpit als zentraler Schalter zur Aktivierung und/oder Deaktivierung der Torque Vectoring Funktionen und/oder des agilen Parkens bereit gestellt werden.

Ein hierin beschriebenes Verfahren kann auch in Form eines Computerprogramm(produkt)s vorliegen, das das Verfahren auf einer Steuereinheit implementiert, wenn es auf der Steuereinheit ausgeführt wird. Ebenso kann ein elektronisch lesbarer Datenträger mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in einer Steuereinheit einer MR-Anlage ein beschriebenes Verfahren durchführen.

Insgesamt zeigt die Erfindung neue Fahrmanöver bei vier einzeln angetriebenen Rädern 12, 14, 16, 18 und deren Bedienung.

### Bezugszeichenliste

- 10: Kraftfahrzeug
- 12: Erstes Rad
- 14: Zweites Rad
- 16: Drittes Rad
- 18: Viertes Rad
- 20: Fahrerassistenzsystem
- 22: Betätigungseinrichtung
- 24: Elektronische Recheneinrichtung
- 26: Erster elektrischer Motor
- 28: Zweiter elektrischer Motor
- 30: Dritter elektrischer Motor
- 32: Vierter elektrischer Motor
- 34: Anzeigeeinrichtung
- 36: Drehpunkt
- 38: Drehradius
- 40: Erfassungseinrichtung
- 42: Straße
- 44: Fahrspur
- 46: Fahrspur
- A1: Erstes Ansteuerungssignal
- A2: Zweites Ansteuerungssignal
- A3: Drittes Ansteuerungssignal
- A4: Viertes Ansteuerungssignal
- F1: Erster Fahrmodus
- F2: Zweiter Fahrmodus
- F3: Dritter Fahrmodus
- U: Umgebung

## Patentansprüche

1. Verfahren zum Betreiben eines Fahrerassistenzsystems (20) eines elektrisch angetriebenen Kraftfahrzeugs (10),
bei welchem mittels eines ersten Ansteuerungssignals (A1) ein erstes Rad (12) des Kraftfahrzeugs (10),
mittels eines zweiten Ansteuerungssignals (A2) ein zweites Rad (14) des Kraftfahrzeugs (10),
mittels eines dritten Ansteuerungssignals (A3) ein drittes Rad (16) des Kraftfahrzeugs (10) und
mittels eines vierten Ansteuerungssignals (A4) ein viertes Rad (18) des Kraftfahrzeugs (10) unabhängig voneinander angetrieben werden und
ein jeweiliges Rad (12, 14, 16, 18) mittels einem jeweiligem dem Rad (12, 14, 16, 18) zugeordneten elektrischen Motor (26, 28, 30 ,32) angetrieben wird,
wobei in Abhängigkeit der vier Ansteuerungssignale (A1, A2, A3, A4) zumindest ein erster Fahrmodus (F1) für das Kraftfahrzeug (10) bereitgestellt wird und
in Abhängigkeit der vier Ansteuerungssignale (A1, A2, A3, A4) zusätzlich zumindest ein zweiter Fahrmodus (F2) bereitgestellt wird und
wobei der erste Fahrmodus (F1) oder der zweite Fahrmodus (F2) mittels einer Betätigungseinrichtung (22) des Fahrerassistenzsystems (20) durch eine einzige Nutzereingabe eingestellt wird, und die vier Ansteuerungssignale (A1, A2, A3, A4) in Abhängigkeit der Nutzereingabe mittels einer elektronischen Recheneinrichtung (24) des Fahrerassistenzsystems (20) zum Ansteuern der vier Räder (12, 14, 16, 18) in Abhängigkeit des eingestellten Fahrmodus (F1, F2, F3) erzeugt werden,
wobei als erster Fahrmodus (F1) ein erstes Wendemanöver des Kraftfahrzeugs (10) eingestellt wird und als zweiter Fahrmodus (F2) ein zum ersten Wendemanöver unterschiedliches zweites Wendemanöver des Kraftfahrzeugs (10) eingestellt wird, wobei beim ersten Wendemanöver des ersten Fahrmodus (F1) mittels der vier Ansteuerungssignale (A1, A2, A3, A4) unterschiedliche Bewegungsrichtungen der vier Räder (12, 14, 16, 18) eingestellt werden, so dass sich die Räder (12, 14, 16, 18) der rechten Seite des Kraftfahrzeugs (10) und der linken Seite des Kraftfahrzeugs (10) gegeneinander drehen
**dadurch gekennzeichnet, dass**
mittels des Fahrerassistenzsystems (20) das Kraftfahrzeug (10) zumindest teilweise autonom, insbesondere vollautonom, zumindest während des ersten Fahrmodus (F1) und/oder des zweiten Fahrmodus (F2) betrieben wird und der erste Fahrmodus (F1) nur aktiviert werden kann, wenn mindestens eine der folgenden Freigabebedingungen erfüllt ist:
- es ist kein Anhänger am Kraftfahrzeug (10) angehängt und/oder
- eine Navigationseinrichtung des Kraftfahrzeugs (10) erkennt, dass sich das Kraftfahrzeug (10) im Gelände befindet und/oder
- eine Geschwindigkeit des Kraftfahrzeugs (10) liegt unter einem zu definierenden Wert.

2. Verfahren nach Anspruch 1,
**dadurch gekennzeichnet, dass**
zu einer funktionellen Freigabe der Manöveraktivierung des ersten Fahrmodus (F1) mindestens eine weitere Freigabebedingung vom Bordnetz und/oder von einer funktionalen Sicherheit und/oder von einem Userinterface kommen kann.

3. Verfahren nach Anspruch 1 oder 2,
**dadurch gekennzeichnet, dass**
mittels der vier Ansteuerungssignale (A1, A2, A3, A4) jeweils unterschiedliche Drehzahlen und/oder Drehmomente und/oder Bewegungsrichtungen der vier Räder (12, 14, 16, 18) eingestellt werden.

4. Verfahren nach einem der vorhergehenden Ansprüche,
**dadurch gekennzeichnet, dass**
zusätzlich mittels des Fahrerassistenzsystems (20) ein Parkmanöver zum Parken des Kraftfahrzeugs (10) als ein dritter Fahrmodus (F3) bereitgestellt wird.

5. Verfahren nach einem der vorhergehenden Ansprüche,
**dadurch gekennzeichnet, dass**
mittels einer berührungssensitiven Anzeigeeinrichtung (34) des Fahrerassistenzsystems (20) und/oder mittels einer Lenkeinrichtung des Kraftfahrzeugs (10) und/oder mittels einer Schalteinrichtung des Kraftfahrzeugs (10) und/oder mittels einer Spracheingabeeinrichtung als jeweilige Betätigungseinrichtung (22) zumindest der erste oder zweite Fahrmodus (F1, F2) eingestellt werden.

6. Verfahren nach einem der vorhergehenden Ansprüche,
**dadurch gekennzeichnet, dass**
das Kraftfahrzeug (10) als zumindest teilweise geländegängiges Kraftfahrzeug (10) bereitgestellt wird.

7. Verfahren nach einem der vorhergehenden Ansprüche,
**dadurch gekennzeichnet, dass**
ein Lenkeinschlag einer Lenkeinrichtung des Kraftfahrzeugs (10) und/oder eine Neigung des Kraftfahrzeugs (10) relativ zu einem Untergrund, auf welchem sich das Kraftfahrzeug (10) befindet, bei der Erzeugung der vier Ansteuerungssignale (A1, A2, A3, A4) mit berücksichtigt werden.

8. Verfahren nach einem der vorhergehenden Ansprüche,
**dadurch gekennzeichnet, dass**
mittels einer Erfassungseinrichtung (40) des Kraftfahrzeugs (10) eine Umgebung (U) des Kraftfahrzeugs (10) erfasst wird und die erfasste Umgebung (U) beim Erzeugen der vier Ansteuerungssignale (A1, A2, A3, A4) mit berücksichtigt wird.

9. Verfahren nach einem der vorhergehenden Ansprüche,
**dadurch gekennzeichnet, dass**
mittels einer Anzeigeeinrichtung (34) des Fahrerassistenzsystems (20) zumindest ein den eingestellten Fahrmodus (F1, F2, F3) charakterisierende Parameter auf der Anzeigeeinrichtung (34) angezeigt wird.

10. Verfahren nach Anspruch 9,
**dadurch gekennzeichnet, dass**
als ein den eingestellten Fahrmodus (F1, F2, F3) charakterisierende Parameter ein Drehpunkt (36) und/oder eine Fahrmodusgeschwindigkeit und/oder ein Drehradius (38) angezeigt wird, wobei insbesondere der den eingestellten Fahrmodus (F1, F2, F3) charakterisierende Parameter durch einen Nutzer eingestellt wird.

11. Verfahren nach einem der vorhergehenden Ansprüche,
**dadurch gekennzeichnet, dass**
zumindest der erste Fahrmodus (F1) und/oder zumindest der zweite Fahrmodus (F2) in Abhängigkeit eines Abbruchkriteriums abgebrochen wird.

12. Fahrerassistenzsystem (20) für ein zumindest teilweise elektrisch betreibbares Kraftfahrzeug (10) mit zumindest einer elektronischen Recheneinrichtung (24) und mit einer Betätigungseinrichtung (22), wobei das Fahrerassistenzsystem (20) zum Durchführen eines Verfahrens nach einem der Ansprüche 1 bis 11 ausgebildet ist.

13. Kraftfahrzeug (10) mit einem Fahrerassistenzsystem (20) nach Anspruch 12 und mit vier voneinander unabhängig antreibbaren Rädern (12, 14, 16, 18).

## Claims

1. Method for operating a driver assistance system (20) of an electricallydriven motor vehicle (10),
in which, independently of one another, a first wheel (12) of the motor vehicle (10) is driven by means of a first control signal (A1),
a second wheel (14) of the motor vehicle (10) is driven by means of a second control signal (A2),
a third wheel (16) of the motor vehicle (10) is driven by means of a third control signal (A3) and
a fourth wheel (18) of the motor vehicle (10) is driven by means of a fourth control signal (A4), and
a relevant wheel (12, 14, 16, 18) is driven by means of a relevant electric motor (26, 28, 30, 32) associated with the wheel (12, 14, 16, 18),
at least one first driving mode (F1) being provided for the motor vehicle (10) on the basis of the four control signals (A1, A2, A3, A4), and
at least one second driving mode (F2) additionally being provided on the basis of the four control signals (A1, A2, A3, A4), and
the first driving mode (F1) or the second driving mode (F2) being set by means of an actuating device (22) of the driver assistance system (20) by a single user input, and the four control signals (A1, A2, A3, A4) being generated on the basis of the user input by means of an electronic computing device (24) of the driver assistance system (20) in order to control the four wheels (12, 14, 16, 18) on the basis of the set driving mode (F1, F2, F3),
a first turning maneuver of the motor vehicle (10) being set as the first driving mode (F1), and a second turning maneuver of the motor vehicle (10) that is different from the first turning maneuver being set as the second driving mode (F2),
different directions of movement of the four wheels (12, 14, 16, 18) being set during the first turning maneuver of the first driving mode (F1) by means of the four control signals (A1, A2, A3, A4), so that the wheels (12, 14, 16, 18) of the right-hand side of the motor vehicle (10) and the left-hand side of the motor vehicle (10) rotate counter to one another
**characterized in that**
by means of the driver assistance system (20), the motor vehicle (10) is operated at least partially autonomously, in particular fully autonomously, at least during the first driving mode (F1) and/or the second driving mode (F2),
and the first driving mode (F1) can only be activated if at least one of the following enabling conditions is met:
- no trailer is attached to the motor vehicle (10) and/or
- a navigation device of the motor vehicle (10) recognizes that the motor vehicle (10) is off-road and/or
- a speed of the motor vehicle (10) is below a value to be defined.

2. Method according to claim 1,
**characterized in that**
for a functional enabling of the maneuver activation of the first driving mode (F1), at least one further enabling condition can come from the vehicle electrical system and/or from a functional safety system and/or from a user interface.

3. Method according to either claim 1 or claim 2,
**characterized in that**
different speeds and/or torques and/or directions of movement of the four wheels (12, 14, 16, 18) are set in each case by means of the four control signals (A1, A2, A3, A4).

4. Method according to any of the preceding claims,
**characterized in that**
in addition, a parking maneuver for parking the motor vehicle (10) is provided as a third driving mode (F3) by means of the driver assistance system (20).

5. Method according to any of the preceding claims,
**characterized in that**
at least the first or second driving mode (F1, F2) is set by means of a touch-sensitive display device (34) of the driver assistance system (20) and/or by means of a steering device of the motor vehicle (10) and/or by means of a switching device of the motor vehicle (10) and/or by means of a voice input device as the relevant actuating device (22).

6. Method according to any of the preceding claims,
**characterized in that**
the motor vehicle (10) is provided as an at least partially off-road motor vehicle (10).

7. Method according to any of the preceding claims,
**characterized in that**
a steering angle of a steering device of the motor vehicle (10) and/or an inclination of the motor vehicle (10) relative to a surface on which the motor vehicle (10) is located are also taken into account when generating the four control signals (A1, A2, A3, A4).

8. Method according to any of the preceding claims,
**characterized in that**
surroundings (U) of the motor vehicle (10) are detected by means of a detection device (40) of the motor vehicle (10) and the detected surroundings (U) are taken into account when generating the four control signals (A1, A2, A3, A4).

9. Method according to any of the preceding claims,
**characterized in that**
at least one parameter characterizing the set driving mode (F1, F2, F3) is displayed on the display device (34) by means of a display device (34) of the driver assistance system (20).

10. Method according to claim 9,
**characterized in that**
a pivot point (36) and/or a driving mode speed and/or a turning radius (38) is displayed as a parameter characterizing the set driving mode (F1, F2, F3), in particular the parameter characterizing the set driving mode (F1, F2, F3) being set by a user.

11. Method according to any of the preceding claims,
**characterized in that**
at least the first driving mode (F1) and/or at least the second driving mode (F2) is aborted on the basis of an abort criterion.

12. Driver assistance system (20) for an at least partially electrically operable motor vehicle (10), having at least one electronic computing device (24) and having an actuating device (22), the driver assistance system (20) being designed to carry out a method according to any of claims 1 to 11.

13. Motor vehicle (10) having a driver assistance system (20) according to claim 12 and having four wheels (12, 14, 16, 18) which can be driven independently of one another.

## Revendications

1. Procédé pour le fonctionnement d'un système d'assistance au conducteur (20) d'un véhicule automobile (10) à entraînement électrique,
dans lequel, à l'aide d'un premier signal de commande (A1), une première roue (12) du véhicule automobile (10),
à l'aide d'un deuxième signal de commande (A2), une deuxième roue (14) du véhicule automobile (10),
à l'aide d'un troisième signal de commande (A3), une troisième roue (16) du véhicule automobile (10) et
à l'aide d'un quatrième signal de commande (A4), une quatrième roue (18) du véhicule automobile (10) sont entraînées indépendamment l'une de l'autre et
une roue (12, 14, 16, 18) respective est entraînée à l'aide d'un moteur électrique (26, 28, 30, 32) respectif associé à la roue (12, 14, 16, 18),
dans lequel au moins un premier mode de conduite (F1) est fourni pour le véhicule automobile (10) en fonction des quatre signaux de commande (A1, A2, A3, A4) et
en fonction des quatre signaux de commande (A1, A2, A3, A4), au moins un deuxième mode de conduite (F2) est en outre fourni et
dans lequel le premier mode de conduite (F1) ou le deuxième mode de conduite (F2) est réglé à l'aide d'un dispositif d'actionnement (22) du système d'assistance au conducteur (20) par une seule entrée d'utilisateur, et les quatre signaux de commande (A1, A2, A3, A4) sont générés en fonction de l'entrée d'utilisateur à l'aide d'un dispositif de calcul électronique (24) du système d'assistance au conducteur (20) pour la commande des quatre roues (12, 14, 16, 18) en fonction du mode de conduite (F1, F2, F3) réglé,
dans lequel on règle comme premier mode de conduite (F1) une première manoeuvre de retournement du véhicule automobile (10) et on règle comme deuxième mode de conduite (F2) une deuxième manoeuvre de retournement du véhicule automobile (10) différente de la première manoeuvre de retournement,
dans lequel, lors de la première manoeuvre de retournement du premier mode de conduite (F1), des directions de mouvement différentes des quatre roues (12, 14, 16, 18) sont réglées à l'aide des quatre signaux de commande (A1, A2, A3, A4), de sorte que les roues (12, 14, 16, 18) du côté droit du véhicule automobile (10) et du côté gauche du véhicule automobile (10) tournent l'une à l'inverse de l'autre
**caractérisé en ce que**
à l'aide du système d'assistance au conducteur (20), le véhicule automobile (10) est conduit au moins partiellement de manière autonome, en particulier de manière entièrement autonome, au moins pendant le premier mode de conduite (F1) et/ou le deuxième mode de conduite (F2)
et le premier mode de conduite (F1) ne peut être activé que si au moins une des conditions de validation suivantes est remplie :
- aucune remorque n'est attelée au véhicule automobile (10) et/ou
- un dispositif de navigation du véhicule automobile (10) détecte que le véhicule automobile (10) se trouve sur le terrain et/ou
- une vitesse du véhicule automobile (10) est inférieure à une valeur à définir.

2. Procédé selon la revendication 1,
**caractérisé en ce que**
pour une validation fonctionnelle de l'activation de manoeuvre du premier mode de conduite (F1), au moins une autre condition de validation peut venir du réseau de bord et/ou d'une sécurité fonctionnelle et/ou d'une interface utilisateur.

3. Procédé selon la revendication 1 ou 2,
**caractérisé en ce que**
à l'aide des quatre signaux de commande (A1, A2, A3, A4), on règle respectivement différentes vitesses de rotation et/ou différents couples de rotation et/ou différentes directions de mouvement des quatre roues (12, 14, 16, 18).

4. Procédé selon l'une des revendications précédentes,
**caractérisé en ce que**
en outre, à l'aide du système d'assistance au conducteur (20), une manoeuvre de stationnement pour le stationnement du véhicule automobile (10) est fournie comme un troisième mode de conduite (F3).

5. Procédé selon l'une des revendications précédentes,
**caractérisé en ce que**
au moins le premier ou le deuxième mode de conduite (F1, F2) sont réglés à l'aide d'un dispositif d'affichage (34) sensible au toucher du système d'assistance au conducteur (20) et/ou à l'aide d'un dispositif de direction du véhicule automobile (10) et/ou à l'aide d'un dispositif de commutation du véhicule automobile (10) et/ou à l'aide d'un dispositif d'entrée vocale en tant que dispositif d'actionnement (22) respectif.

6. Procédé selon l'une des revendications précédentes,
**caractérisé en ce que**
le véhicule automobile (10) est fourni sous la forme d'un véhicule automobile (10) au moins partiellement tout-terrain.

7. Procédé selon l'une des revendications précédentes,
**caractérisé en ce que**
un angle de braquage d'un dispositif de direction du véhicule automobile (10) et/ou une inclinaison du véhicule automobile (10) par rapport à un sol sur lequel se trouve le véhicule automobile (10) sont également pris en compte lors de la génération des quatre signaux de commande (A1, A2, A3, A4).

8. Procédé selon l'une des revendications précédentes,
**caractérisé en ce que**
un environnement (U) du véhicule automobile (10) est détecté à l'aide d'un dispositif de détection (40) du véhicule automobile (10) et l'environnement (U) détecté est pris en compte lors de la génération des quatre signaux de commande (A1, A2, A3, A4).

9. Procédé selon l'une des revendications précédentes,
**caractérisé en ce que**
au moins un paramètre caractérisant le mode de conduite (F1, F2, F3) réglé est affiché sur le dispositif d'affichage (34) à l'aide d'un dispositif d'affichage (34) du système d'assistance au conducteur (20).

10. Procédé selon la revendication 9,
**caractérisé en ce que**
un point de rotation (36) et/ou une vitesse de mode de conduite et/ou un rayon de rotation (38) sont affichés en tant que paramètre caractérisant le mode de conduite (F1, F2, F3) réglé, dans lequel en particulier le paramètre caractérisant le mode de conduite (F1, F2, F3) réglé est réglé par un utilisateur.

11. Procédé selon l'une des revendications précédentes,
**caractérisé en ce que**
au moins le premier mode de conduite (F1) et/ou au moins le deuxième mode de conduite (F2) est interrompu en fonction d'un critère d'interruption.

12. Système d'assistance au conducteur (20) pour un véhicule automobile (10) pouvant fonctionner au moins partiellement à l'électricité, comportant au moins un dispositif de calcul électronique (24) et comportant un dispositif d'actionnement (22), dans lequel le système d'assistance au conducteur (20) est conçu pour la mise en oeuvre d'un procédé selon l'une des revendications 1 à 11.

13. Véhicule automobile (10) comportant un système d'assistance au conducteur (20) selon la revendication 12 et comportant quatre roues (12, 14, 16, 18) pouvant être entraînées indépendamment les unes des autres.
